Europäisches Patentamt

European Patent Office

Office européen des brevets

(11) Veröffentlichungsnummer: **0 122 959**

**B1**

# (12) EUROPÄISCHE PATENTSCHRIFT

(45) Veröffentlichungstag der Patentschrift:
20.05.87

(21) Anmeldenummer: **83107450.5**

(22) Anmeldetag: **28.07.83**

(51) Int. Cl.⁴: **G 01 F 1/60**

(54) **Schaltungsanordnung zur Unterdrückung von Gleichtaktspannungen und Elektroden-Störgleichspannungen bei der Auswertung von Messwertspannungen, die von Messelektroden eines induktiven Durchflussmessgerätes abgegeben werden.**

(30) Priorität: **25.04.83 DE 3314954**

(43) Veröffentlichungstag der Anmeldung:
**31.10.84 Patentblatt 84/44**

(45) Bekanntmachung des Hinweises auf die Patenterteilung:
**20.05.87 Patentblatt 87/21**

(84) Benannte Vertragsstaaten:
**BE FR GB IT NL**

(56) Entgegenhaltungen:
**DE-A-2 118 092**
**DE-B-2 744 845**
**US-A-4 193 298**
**US-A-4 357 835**

(73) Patentinhaber: **Fischer & Porter GmbH, Postfach 701 Dransfelder Strasse 2, D-3400 Göttingen (DE)**

(72) Erfinder: **Geisler, Gottfried, Ing.- Grad., Olenhuser Weg 6, D-3400 Göttingen (DE)**
Erfinder: **Seebode, Albert, Sellenfried 21, D-3405 Rosdorf (DE)**

(74) Vertreter: **Weickmann, Heinrich, Dipl.- Ing., Patentanwälte Dipl.- Ing. H.Weickmann Dipl.- Phys.Dr. K.Fincke Dipl.- Ing. F.A.Weickmann Dipl.- Chem. B. Huber Dr.- Ing. H. Liska Dipl.- Phys.Dr. J. Prechtel Postfach 860820, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung nach dem Oberbegriff des Anspruchs 1.

Bei einer nach der DE-A- 21 18 092 bekannten Schaltungsanordnung dieser Art wird das Magnetfeld durch von Spulen umwickelte Eisenkerne erzeugt; die Wirkung von magnetischen Störfeldern, die von in den Eisenkernen induzierten Wirbelströmen herrühren, wird durch die besondere Ausbildung der Schaltungsanordnung kompensiert.

Nach der DE-B- 27 44 845 ist ein Verfahren zur Kompensation einer elektrochemisch verursachten Störgleichspannung bei einer magnetisch-induktiven Durchflußmessung mit periodisch umgepoltem magnetischem Gleichfeld bekannt, bei welchem ein Nutzsignal dadurch erhalten wird, daß eine Signalspannung jeweils bei einander gleichen, gegenpoligen Werten des Magnetfeldes abgetastet und gespeichert wird und die Differenz der gespeicherten Abtastwerte gebildet wird. Dabei werden gegenpolige Teilperioden des Magnetfeldes jeweils durch eine Magnetfeldpause voneinander getrennt, in der jeweils zu einem gleichen Zeitabstand vor einer nächsten Abtastung der Signalspannung während eines Kompensationszeitintervalls eine der Signalspannung entgegengeschaltete Kompensationsspannung erzeugt wird, welche die Signalspannung innerhalb dieses Kompensationszeitintervalls auf den Wert Null kompensiert und welche bis zum nächsten Kompensationszeitintervall beibehalten wird.

Bei den im Oberbegriff des Anspruchs 1 angegebenen Gleichtakt-Spannungen und Elektrodenstörgleichspannungen handelt es sich in der Regel um Spannungen, die von einer Polarisation der Meßelektrode herrühren.

Aufgabe der Erfindung ist es, eine Schaltungsanordnung nach dem Oberbegriff des Anspruchs 1 anzugeben, die diese Spannungen, da sie für die Stärke des Stroms des das Durchflußmeßgerät durchfließenden Mediums nicht charakteristisch sind, bei der Auswertung der von den Meßelektroden abgegebenen Meßspannung eliminiert.

Die Lösung dieser Aufgabe ist im Kennzeichen des Anspruchs 1 angegeben

Die erfindungsgemäße Schaltundsanordnung ist in einfacher Weise mit Standard-Operationsverstärkern aufzubauen und führt zuverlässig zur Eliminierung von Gleichtakt-Spannunden und Störgleichspannungen, die von den Meßelektroden geliefert werden.

Die Wirkungsweise und weitere Vorteile der Schaltung, auch in Zusammenhang mit den Unteransprüchen, werden in der folgenden Beschreibung eines Ausführungsbeispiels erläutert.

Fig. 1 zeigt ein Prinzipschaltbild der erfindungsgemäßen Schaltungsanordnung.

Fig. 2 zeigt verschiedene, für die Schaltungsanordnung nach Fig. 1 charakteristische Zeitdiagramme.

In einem dielektrisch ausgekleideten Meßrohr 13 eines induktiven Durchflußmeßgeräts stehen zwei Meßelektroden 11, 12 in elektrischem Kontakt mit einer das Meßrohr 13 durchströmenden Flüssigkeit 10.

Beidseitig des Rohrs sind zwei hintereinandergeschaltete Magnetspulen 14 angeordnet, die in wechselnder Richtung über einen Stromumschalter 27 mit einem Strom I gespeist werden. Das Meßrohr 13 besteht aus Metall und ist an eine Erdleitung 40 angeschlossen.

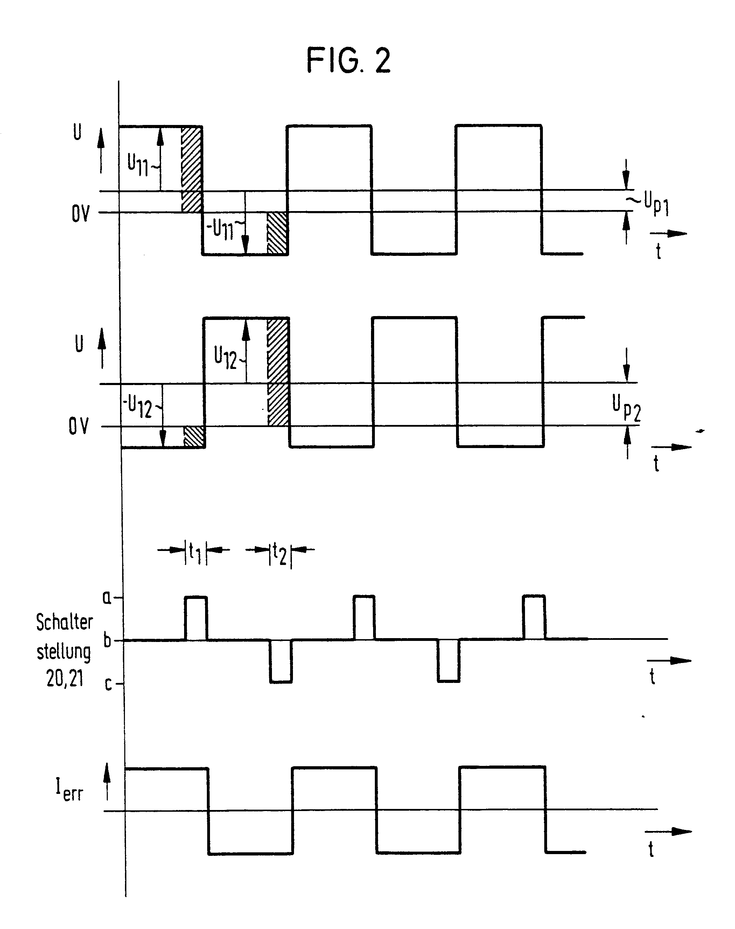

Bei einer gleichbleibenden Fließgeschwindigkeit der das Meßrohr 13 durchströmenden Flüssigkeit 10 werden von den Elektroden 11 und 12 durchflußproportionale Spannungen $U_{11}$ und $U_{12}$ mit dem Magnetfeld wechselnder Polarität abgegeben, die von Spannungen gleichbleibender Polarität, herrührend von einer Polarisation der Elektroden 11, 12 und daher Polarisationsspannungen, $U_{p1}$ und $U_{p2}$ genannt, überlagert sind (siehe die beiden oberen Diagramme in Fig. 2).

Die Elektroden 11, 12 sind an die nicht invertierenden Eingänge von Operationsverstärkern 15, 16 angeschlossen, deren Ausgang über einen Widerstand 18 bzw. 19 mit ihrem invertierenden Eingang verbunden ist. Die Operationsverstärker 15, 16 arbeiten also über die Widerstände 18, 19 gegengekoppelt. Die invertierenden Eingänge der Operationsverstärker 15, 16 sind durch eine Reihenschaltung eines Widerstands 17 und eines Kondensators 24 miteinander verbunden. Die Zeitkonstante $\tau$ dieser R-C Kombination aus dem Widerstand 17 und dem Kondensator 24 ist groß gegenüber der Periodendauer der Meßfrequenz. Die Ausgänge der beiden Operationsverstärker 15, 16 sind während Zeiträumen $t_1$, $t_2$ (siehe Fig. 2), in denen der Fluß des Magnetfelds zwischen den Elektroden 11, 12 bei unterschiedlicher Richtung des Magnetfelds konstant ist, über die entsprechend gesteuerten Schalter 20, 21 mit einem Spannungsspeicher 23 verbunden. Der Spannungsspeicher 23 ist in dem vorliegenden Ausführungsbeispiel ein Kondensator. Aufeinanderfolgend ihm zugeführte Spannungen subtrahiert dieser Kondensator. Das Subtraktionsergebnis ist von den Spannungen $U_{p1}$ und $U_{p2}$ befreit und wird während Zeiträumen, in denen die Schalter 20, 21 an Leerpolen liegen, über Schalter 25, 26 einer Auswerteschaltung zugeführt.

Der Spannungsspeicher 23 ist im vorliegenden Ausführungsbeispiel - wie schon ausgeführt - ein Kondensator. Dieser Kondensator ist mittels Dreipol-Schaltern 20, 21 gegensinnig an die Ausgänge der Operationsverstärker 15, 16 über die Pole a - c und an die Leerpole b und mittels der als Überbrückungsschalter ausgebildeten Schalter 25, 26 an die Auswerteschaltung schaltbar. Die Kapazität C des Kondensators 23 ist bevorzugt derart hoch, daß er Störwechselspannungen höherer Frequenz als die durch den Stromumschalter 27 festgelegten Schaltfrequenz des Magnetfelds im wesentlichen zu Null integriert. Die Schalter 20, 21, 25, 26 werden von einem mit der Schaltfrequenz des Magnetfelds gesteuerten Schalterbetätigungsglied 22 gesteuert.

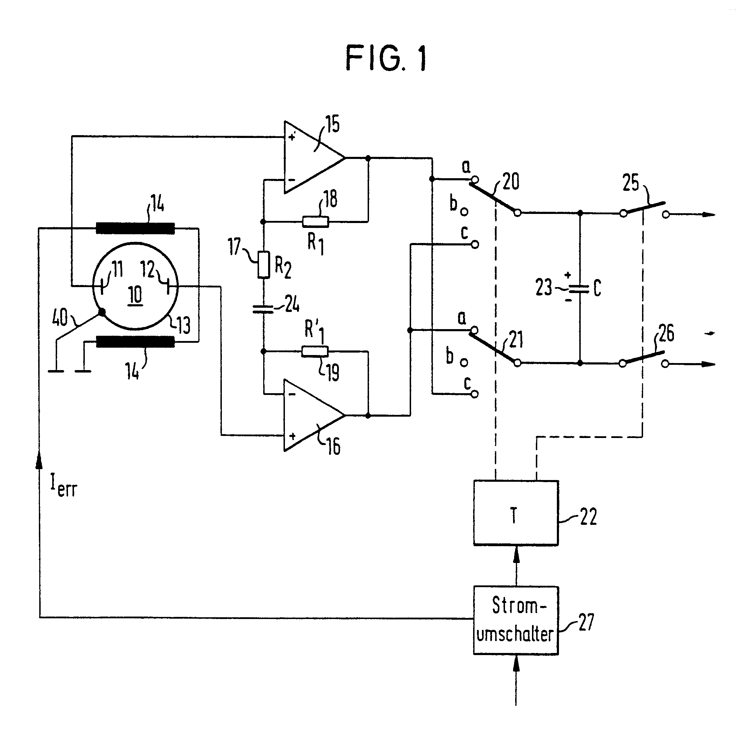

Die Schaltungsanordnung nach Fig. 1 ist in folgender Weise ausgelegt: Die Verstärkung der Polarisationsspannung $U_{p1}$ und $U_{p2}$ in den Operationsverstärkern 15, 16 ist gleich 1. Die durchflußproportionalen Spannungen $U_{11}$ und $U_{12}$ werden jeweils um den Faktor $v = \frac{R_2}{R_1} + 1$ und $v' = \frac{R_2}{R'_1} + 1$ verstärkt. Der Kondensator 24 ist so dimensioniert, daß sein Blindwiderstand für die Meßfrequenz klein gegenüber $R_2$ ist. Die Verstärkung der zwischen den nicht invertierenden Eingängen der Operationsverstärker 15, 16 liegenden Elektroden-Gleichspannung plus Gleichtaktspannung beträgt dann, ebenfalls 1. Dies erklärt sich wie folgt: Da die Ausgangsspannungsanteile der Operationsverstärker 15, 16, die von Gleichtaktspannungen an ihren beiden Eingängen herrühren, gleich sind, fällt keine Spannung über den Widerstand 17 und den Kondensator 24 ab. Die Reihenschaltung aus dem Widerstand 17 und dem Kondensator 24 entspricht insoweit einem Widerstandswert unendlich bei Betrachtung der Gleichtaktspannungen. Es ergibt sich daher eine 100-prozentige Rückführung mit der Verstärkung 1 für die Operationsverstärker 15, 16.

Wählt man $R_1 = R'_1$ (bzw. $R'_1$) groß gegenüber $R_2$, so erhält man eine Gleichtaktunterdrückung, die der Differenz-Wechselspannungsverstärkung entspricht.

Die Gleichtaktunterdrückung ist dabei definiert als Verhältnis der Differenzverstärkung zur Gleichtaktverstärkung.

Der Kondensator 24 entkoppelt die beiden Operationsverstärker 15, 16 gleichspannungsmäßig. Die Schaltung mit den Operationsverstärkern 15, 16 arbeitet also als Wechselspannungs-Differenzverstärker mit symmetrischem Ausgang.

Die Eliminierung der Polarisationsspannungen $U_{p1}$ und $U_{p2}$ ist anhand Fig. 2 verständlich: Während der Zeiträume $t_1$ befinden sich die Schalter 20, 21 in der Schalterstellung a. Zum Beginn der Zeiträume $t_1$ ist das Magnetfeld eingeschaltet und zeitlich konstant. Die Spannungen $U_{11}$ und $U_{12}$ sowie $U_{p1}$ und $U_{p2}$ gelangen von den Elektroden 11, 12 über die Operationsverstärker 15 und 16 und die Schalter 20, 21 auf den Kondensator 23. Während dieser Zeiträume $t_1$ wirken folgende Spannungen (gegenüber Masse) auf den Kondensator 23:

von der Elektrode 11: $v \cdot U_{11} + U_{p1}$ (auf +Pol des Kondensators)

von der Elektrode 12:$-v \cdot U_{12} + U_{p2}$ (auf -Pol des Kondensators)

Der nächste Schritt im zeitlichen Ablauf ist die Umpolung des die Spulen 14 durchsetzenden Stroms mittels des Stromumschalters 27. Die Umpolung des Stroms bewirkt eine Umpolung des Magnetfeldes und damit einen Wechsel der Polarität der Spannungen $U_{11}$ und $U_{12}$. Dies geschieht noch vor den folgenden Zeiträumen $t_2$, also zwischen den Zeiträumen $t_1$ und $t_2$, während sich die Schalter 20, 21 in der Schalterstellung b befinden. Der Kondensator 23 ist also dann abgetrennt. Zum Beginn der Zeiträume $t_2$ werden die Schalter 20 und 21 in die Schalterstellung c gebracht. Während der Zeiträume $t_2$ gelangen die von den jetzt umgepolten Operationsverstärkern 15, 16 gelieferten Spannungen zusätzlich auf den Kondensator 23, so daß sich folgende Ladungen auf den beiden Belegungen des Kondensators 23 nach zwei aufeinanderfolgenden Zeiträumen $t_1$ und $t_2$ sammeln (die Ladungen sind spannungsproportional):

Zeitraum $t_1$    Zeitraum $t_2$
Kondensator +Pol $V \cdot U_{11} + U_{p1}$    $V \cdot U_{12} + U_{p2}$
Kondensator -Pol $-(V \cdot U_{12}) + U_{p2}$    $-(V \cdot U_{11}) + U_{p1}$
Da $U_{11} = U_{12}$, ergibt die vorzeichenrichtige Subtraktion

$$
\begin{array}{c}
2 \cdot V \cdot U_{11} + U_{p1} + U_{p2} \\
- \underline{(-2 \cdot V \cdot U_{11} + U_{p1} + U_{p2})} \\
4 \cdot V \cdot U_{11} + 0 + 0
\end{array}
$$

Als Mittelwert aus zwei aufeinanderfolgenden Zeiträumen $t_1$ und $t_2$ erhält man für das auszuwertende durchflußproportionale Meßsignal am Kondensator 23 die Spannung $2 \cdot V \cdot U_{11}$. Dies ist eine gesiebte und von Störungen befreite Gleichspannung. Die Weiterverarbeitung dieser Gleichspannung erfolgt in den Pausen zwischen den Zeiträumen $t_1$ und $t_2$ nach Schließen der Schalter 25, 26.

Der Kondensator 23 arbeitet mit zwei - nicht dargestellten - in Reihe geschalteten Widerständen als Integrator bzw. Speicher für höherfrequente Störspannungen.

**Patentansprüche**

1. Schaltungsanordnung zur Unterdrückung von Gleichtaktspannungen und Elektrodenstörgleichspannungen, die von Meßelektroden (11, 12) eines mit einem Magnetfeld periodisch wechselnder Richtung arbeitenden, induktiven Durchflußmeßgeräts zusätzlich zu Meßwertspannungen wechselnder Polarität abgegeben werden, bei der jede Meßelektrode (11, 12) an je einem nicht invertierenden Eingang eines Operationsverstärkers (15, 16) angeschlossen ist, dessen Ausgang auf seinen anderen, invertierenden Eingang über einen Widerstand (18, 19) gegengekoppelt ist, dadurch gekennzeichnet, daß jeweils die invertierenden Eingänge zweier Operationsverstärker (15, 16) durch eine Reihenschaltung (17, 24) eines Widerstands (17) und eines Kondensators (24) miteinander verbunden sind, daß die Gegenkopplungswiderstände (18, 19) gleiche Werte ($R_1$ = $R'_1$) haben, daß der Widerstand (17) in der Reihenschaltung (17, 24) einen Wert ($R_2$) hat, der klein gegenüber dem Wert ($R_1$, $R'_1$) der Gegenkopplungswiderstände (18, 19) ist, daß die Ausgänge dieser beiden Operationsverstärker (15, 16) während Zeiträumen ($t_1$, $t_2$), in denen der Fluß des Magnetfelds zwischen den Elektroden (11, 12) bei unterschiedlicher Richtung des Magnetfelds konstant ist, mit einem Spannungsspeicher (23) verbunden sind, daß in diesem Spannungsspeicher (23) aufeinanderfolgend gespeicherte Spannungen voneinander subtrahiert und die Subtraktionsergebnisse zu Meßwertsignalen weiterverarbeitet werden.

2. Schaltungsanordnung nach Anspruch 1, dadurch gekennzeichnet, daß der Spannungsspeicher (23) ein Kondensator ist, dessen Belegungen mittels Dreipol-Schaltern (20, 21) gegensinnig an die Ausgänge der Operationsverstärker (15, 16) und an Leerpole (b) und mittels Überbrückungsschaltern (25, 26) an eine Auswerteschaltung schaltbar sind.

3. Schaltungsanordnung nach Anspruch 2, dadurch gekennzeichnet, daß die Kapazität (C) des Kondensators (23) derart hoch ist, daß er Störwechselspannungen höherer Frequenz als die Schaltfrequenz des Magnetfelds im wesentlichen zu Null integriert.

4. Schaltungsanordnung nach Anspruch 2, dadurch gekennzeichnet, daß die Schalter (20, 21, 25, 26) von einem mit der Schaltfrequenz des Magnetfelds gesteuerten Schalterbetätigungsglied (22) gesteuert sind.

## Claims

1. A circuit arrangement for suppressing in-phase voltages and electrode interference DC voltages which are emitted, in addition to measured value voltages of changing polarity, by measuring electrodes (11, 12) of an inductive flow meter operating with a magnetic field of periodically changing direction, in which each measuring electrode (11, 12) is connected to a non-inverting input of a respective operational amplifier (15, 16), the ouput of which is fedback to its other, inverting input via a resistor (18, 19), characterised in that the inverting inputs of the two operational amplifiers (15, 16) are connected to one another by a series connection (17, 24) of a resistor (17) and a capacitor (24), in that the feedback resistors (18, 19) have equal values ($R_1$ = $R'_1$), in that the resistor (17) in the series connection (17, 24) has a value $R_2$ which is small in relation to the value ($R_1$, $R'_1$) of the feedback resistors (18, 19), in that the outputs of the two operational amplifiers (15, 16) are connected to a voltage storing means (23) during periods ($t_1$, $t_2$) in which the flux of the magnetic field between the electrodes (11, 12) is constant with changing direction of the magnetic field, and in that successively stored voltages are subtracted from one another in the voltage storing means (23) and the results of the subtraction further processed to form the measured value signals.

2. A circuit arrangement according to Claim 1, characterised in that the voltage storing means (23) is a capacitor whose plates can be selectively connected by means of three-pole switches (20, 21) to the output of either of the operational amplifiers (15, 16) or to no-load poles (b), and by means of bridging switches (25, 26) to an evaluating circuit.

3. A circuit arrangement according to Claim 2, characterised in that the capacitance (C) of the capacitor (23) is so high that it integrates substantially to zero interference alternating voltages of higher frequency than the switching frequency of the magnetic field.

4. A circuit arrangement according to Claim 2, characterised in that the switches (20, 21, 25, 26) are controlled by a switch actuating member (22) controlled at the switching frequency of the magnetic field.

## Revendications

1. Agencement de circuit pour la suppression des tensions de mode commun et des tensions continues parasites d'électrodes qui sont fournies par des électrodes de mesure (11, 12) d'un débitmètre inductif fonctionnant avec un champ magnétique dont le sens alterne périodiquement, additionnellement à des tensions de valeurs de mesure de polarité alternative, dans lequel chaque électrode de mesure (11, 12) est raccordée à une entrée non inverseuse d'un amplificateur opérationnel (15, 16) dont la sortie est raccordée à son autre entrée inverseuse par l'intermédiaire d'une résistance (18, 19), caractérisé en ce que les entrées inverseuses respectives de deux amplificateurs opérationnels (15, 16) sont reliées l'une à l'autre par un circuit série (17, 24) constitué par une résistance (17) et un condensateur (24), en ce que les résistances de contre-réaction (18, 19) ont la même valeur ($R_1$ = $R'_1$), en ce que la résistance (17) présente dans le circuit série (17, 24) une valeur ($R_2$) qui est faible par rapport à la valeur ($R_1$ = $R'_1$) des résistance de contre-réaction (18, 19), en ce que les sorties de ces deux amplificateurs opérationnels (15, 16) sont reliées, pendant les périodes ($t_1$, $t_2$) pendant lesquelles le flux du champ magnétique entre les électrodes (11, 12) est constant pour une direction différente du champ magnétique, à un accumulateur de tension (23), en ce que dans cet accumulateur de tension (23) des tensions successives et emmagasinées sont soustraites les unes des autres et le résultat de la soustraction subit un traitement subséquent pour les signaux des valeurs de mesure.

2. Agencement de circuit selon la revendication 1, caractérisé en ce que l'accumulateur de tension (23) est un condensateur dont les occupations peuvent être commutées par des commutateurs à trois pôles (20, 21) en sens contraire sur les sorties des amplificateurs opérationnels (15, 16) et sur des pôles à vide (b) et par des commutateurs de pontage (25, 26) à un circuit d'évaluation.

3. Agencement de circuit selon la revendication 2, caractérisé en ce que la capacité (C) du condensateur (23) a une valeur élevée telle qu'elle intègre sensiblement à zéro les tensions alternatives parasites de fréquence plus élevée que la fréquence de commutation du champ magnétique.

4. Agencement de circuit selon la revendication 2, caractérisé en ce que les commutateurs (20, 21, 25, 26) sont commandés par un organe d'actionnement de commutateur (22) commandé par la fréquence de commutation du champ magnétique.

# FIG. 1

# FIG. 2